# EUROPÄISCHE PATENTSCHRIFT

(11) **EP 2 694 331 B1**
(45) Veröffentlichungstag und Bekanntmachung des Hinweises auf die Patenterteilung: **03.02.2016**
(21) Anmeldenummer: 12707526.5
(22) Anmeldetag: 01.03.2012
(51) Int. Cl.: B60R 1/02, B60R 1/07, G08G 1/16, B62D 15/02

(54) **VERFAHREN UND KONTROLLSYSTEM ZUM VERSTELLEN MINDESTENS EINES AUßENSPIEGELS EINES KRAFTFAHRZEUGES**
METHOD AND MONITORING SYSTEM FOR ADJUSTING AT LEAST ONE EXTERIOR REAR-VIEW MIRROR OF A MOTOR VEHICLE
PROCÉDÉ ET SYSTÈME DE COMMANDE PERMETTANT DE RÉGLER AU MOINS UN RÉTROVISEUR EXTÉRIEUR D'UN VÉHICULE AUTOMOBILE

(30) Priorität: 08.04.2011 DE 102011007017
(43) Veröffentlichungstag der Anmeldung: 12.02.2014
(73) Patentinhaber: Robert Bosch GmbH, 70442 Stuttgart (DE)
(72) Erfinder: STAACK, Jochen, 70178 Stuttgart (DE)
(86) Internationale Anmeldenummer: PCT/EP2012/053505
(87) Internationale Veröffentlichungsnummer: WO 2012/136419

(56) Entgegenhaltungen:
- WO-A1-2010/052521
- DE-A1- 3 627 438
- DE-A1- 19 922 284
- JP-A- 2006 341 721
- US-A1- 2002 052 680

## Beschreibung

Die Erfindung betrifft ein Verfahren, mit dem eine einer Parklückenart entsprechenden Einstellung mindestens eines Außenspiegels eines Kraftfahrzeuges während eines Einparkvorganges erreicht wird, gemäß dem Anspruch 1. Weiterhin betrifft die Erfindung ein Kontrollsystem zum Verstellen mindestens eines Außenspiegels eines Kraftfahrzeuges, wobei das Kontrollsystem ein Steuergerät zum automatischen Verstellen des Außenspiegels aufweist, gemäß dem Oberbegriff des unabhängigen Anspruches 7.

### Stand der Technik

Ein Kraftfahrzeug wird üblicherweise entweder in eine Längsparklücke oder in eine Querparklücke insbesondere rückwärts eingeparkt. Im Falle eines Einparkens in eine Längsparklücke ist die Fahrrichtung des einzuparkenden Kraftfahrzeuges vor dem Einparkvorgang parallel zu der Ausrichtung des Kraftfahrzeuges im eingeparkten Zustand, während im Falle eines Einparkens in eine Querparklücke die Fahrrichtung des einzuparkenden Kraftfahrzeuges vor dem Einparkvorgang im Wesentlichen senkrecht zu der Ausrichtung des Kraftfahrzeuges im eingeparkten Zustand ist. Diese Definitionen der Längsparklücke und der Querparklücke sollen im Folgenden beibehalten werden. Wird ein Kraftfahrzeug in eine Längsparklücke eingeparkt, so ist es vorteilhaft, dass ein rechter Außenspiegel des Kraftfahrzeuges so eingestellt ist, dass ein Fahrer des Kraftfahrzeuges vermutlich eine Bordsteinkante im rechten Außenspiegel sieht. Im Stand der Technik, siehe z.B. WO 2010/052 521 A1, wird der rechte Außenspiegel daher immer dann, wenn ein Fahrer einen Rückwärtsgang einlegt, automatisch, d.h. ohne manuelle Betätigung des Fahrers, in eine Stellung, in der der Fahrer vermutlich die Bordsteinkante im rechten Außenspiegel sieht, überführt. Hierbei wird üblicherweise der rechte Außenspiegel weiter Richtung Boden geneigt.

Nachteilig an der automatischen Einstellung des rechten Außenspiegels bei jedem Einlegen des Rückwärtsganges ist, dass der Fahrer im rechten Außenspiegel auch dann einen bodennahen Bereich sieht, wenn der Fahrer nicht in eine Längsparklücke, sondern in eine Querparklücke einparken möchte. Diese Einstellung des rechten Außenspiegels ist im Falle einer Querparklücke nicht hilfreich. Der Fahrer muss daher manuell den Spiegel in eine zum Einparken in eine Querparklücke hilfreiche Position zurückstellen.

### Offenbarung der Erfindung

Es ist daher die Aufgabe der Erfindung, ein Verfahren und ein Kontrollsystem zum Verstellen mindestens eines Außenspiegels eines Kraftfahrzeuges bereitzustellen, bei dem ein Fahrer unabhängig von der Parklückenart mit automatisch vorteilhaft eingestellten Außenspiegeln rückwärts einparken kann.

Zur Lösung der Aufgabe wird ein Verfahren mit den Merkmalen des Anspruches 1 vorgeschlagen. Vorteilhafte Weiterbildungen des Verfahrens sind in den abhängigen Verfahrensansprüchen angegeben. Die Aufgabe wird weiterhin durch ein Kontrollsystem mit den Merkmalen des unabhängigen Anspruchs 8 gelöst. Vorteilhafte Weiterbildungen des Kontrollsystems sind in den abhängigen Vorrichtungsansprüchen angegeben. Merkmale und Details, die im Zusammenhang mit dem erfindungsgemäßen Verfahren beschrieben sind, gelten dabei selbstverständlich auch im Zusammenhang mit dem erfindungsgemäßen Kontrollsystem und umgekehrt. Dabei können die in den Ansprüchen und in der Beschreibung erwähnten Merkmale jeweils einzeln für sich oder in Kombination erfindungswesentlich sein.

Erfindungsgemäß ist vorgesehen, dass das Verfahren mindestens die folgenden Schritte aufweist:
a. eine Steuereinheit des Kraftfahrzeuges erfasst die Parklückenart, in die das Kraftfahrzeug einparken soll,
b. die Steuereinheit veranlasst ein Verstellen des Außenspiegels in eine Einstellung, die der in Schritt a. erfassten Parklückenart angepasst ist, wenn eine aktuelle Einstellung des Außenspiegels nicht der Einstellung, die der in Schritt a. erfassten Parklückenart angepasst ist, entspricht.

Hierbei kann die Parklückenart insbesondere eine Längsparklücke oder eine Querparklücke sein. Es ist jedoch denkbar, dass weitere Parklückenarten in das erfindungsgemäße Verfahren integriert werden. Die Schritte des erfindungsgemäßen Verfahrens werden in der Reihenfolge a., b. durchgeführt. Schritt b. wird automatisch, d. h. ohne eine Aktion eines Fahrers des Kraftfahrzeuges, durchgeführt. Schritt a. kann automatisch durchgeführt werden. Vor, zwischen und hinter den Schritten a. und b. kann das Verfahren optional weitere Schritte aufweisen. Die Tatsache, dass eine aktuelle Einstellung des Außenspiegels nicht der ermittelten Einstellung entspricht, kann von der Steuereinheit angenommen werden oder anhand von der Steuereinheit vorliegenden Informationen ermittelt werden. Bei dem Einparkvorgang wird insbesondere das Kraftfahrzeug rückwärts eingeparkt.

Kern der vorliegenden Erfindung ist, dass eine Steuereinheit des Kraftfahrzeuges in Schritt a. die Information erhält, in welche Parklückenart das Kraftfahrzeug einparken soll. Erst dann wird gegebenenfalls der Außenspiegel verstellt, so dass die jeweilige Einstellung des Außenspiegels der Einstellung, die zu der jeweiligen Parklückenart passt, entspricht. Befindet sich der Außenspiegel vor dem Verfahren oder/und während Schritt a. in einer Einstellung, die zu der Parklückenart, in die das Kraftfahrzeug einparken soll, passt, so wird der Außenspiegel nicht verstellt, sondern verbleibt in dieser Einstellung.

Durch das erfindungsgemäße Verfahren wird ein Verfahren zur Verfügung gestellt, mit dem eine für jede Parklückenart, in die das Kraftfahrzeug einparken soll, günstige Einstellung mindestens eines Außenspiegels erreicht wird, wobei ein eventuell nötiges Verstellen des Außenspiegels immer automatisch erfolgt. Ein manuelles Umstellen des Außenspiegels für jeden Einparkvorgang entfällt.

Bei dem Außenspiegel kann es sich um den rechten Außenspiegel handeln. Es ist auch denkbar, dass das erfindungsgemäße Verfahren nur für den linken Außenspiegel oder für beide Außenspiegel durchgeführt wird.

Das erfindungsgemäße Verfahren kann insbesondere Teil eines autonomen oder semiautonomen Einparkvorganges sein. Hierbei wird unter einem semiautonomen Einparkvorgang verstanden, dass ein Parksteuergerät während des Einparkvorganges die Querführung, d.h. die Lenkung, des Kraftfahrzeuges übernimmt. Bei einem autonomen Einparkvorgang wird zusätzlich von dem Parksteuergerät auch die Längsführung, d. h. die Geschwindigkeitskontrolle, übernommen. Das erfindungsgemäße Verfahren kann in den autonomen oder semiautonomen Einparkvorgang integriert sein. Sowohl bei einem semiautonomen als auch bei einem autonomen Einparkvorgang wird zu Beginn des Einparkvorganges mindestens eine Parklücke vermessen. Hierbei kann es sein, dass das Parksteuergerät eine Parklücke vermessen lässt, nachdem ein Fahrer des Kraftfahrzeuges dem Parksteuergerät z. B. durch eine Eingabetaste, signalisiert hat, dass nun ein Einparkvorgang erfolgen soll. Alternativ lässt das Parksteuergerät jede potentielle Parklücke vermessen, wenn die Geschwindigkeit des Fahrzeuges einen Grenzwert, z. B. 50 km/h, insbesondere 20 km/h, unterschreitet.

Ist das erfindungsgemäße Verfahren Teil eines semiautonomen oder autonomen Einparkvorganges, so kann die Steuereinheit Teil des Parksteuergerätes, das den semiautonomen oder autonomen Einparkvorgang steuert, sein. Ebenfalls kann es sein, dass die Steuereinheit nur durch ein oder mehrere Softwarebausteine des Parksteuergerätes realisiert ist. Im Rahmen des Offenbarungsgehaltes kann insbesondere in diesen Ausführungsformen der Begriff "die Steuereinheit" durch den Begriff "das Parksteuergerät" ersetzt werden.

Vorteilhafterweise kann der Fahrer selber, insbesondere manuell, festlegen, in welche Parklückenart er einparken möchte. Insbesondere kann der Fahrer festlegen, um welche Parklückenart es sich bei der vom Parksteuergerät vermessene Parklücke handelt. Hierbei kann der Fahrer z.B. die Parklückenart über eine Eingabetaste festlegen, wodurch ein Signal erzeugt wird, das an die Steuereinheit weitergeleitet wird. Daher kann es sein, dass im Schritt a. des erfindungsgemäßen Verfahrens die Steuereinheit die Parklückenart, in die das Kraftfahrzeug einparken soll, durch ein empfangenes Signal erfasst, wobei das Signal dadurch erzeugt wird, dass der Fahrer die Parklückenart vorgibt. In diesem Fall ist das erfindungsgemäße Verfahren auch dann durchführbar, wenn es sich nicht um einen autonomen oder semiautonomen Einparkvorgang handelt. Alternativ ist es denkbar, dass das Parksteuergerät beim Vermessen der potentiellen Parklücke selber festlegt, um welche Parklückenart es sich bei der potentiellen Parklücke handelt und diese Information der Steuereinheit zur Verfügung steht. Hierdurch ergibt sich ebenfalls der Schritt a.. In einer noch weiteren Alternative kann das Parksteuergerät einen Vorschlag machen, zu welcher Parklückenart das Parklückengerät die potentielle Parklücke zuordnen würde, wobei der Fahrer den Vorschlag des Parksteuergerätes über eine Eingabetaste korrigieren oder bestätigen kann oder bei mehreren Vorschlägen einen Vorschlag auswählen kann. Der Steuereinheit, z. B. als Teil des Parksteuergerätes, steht die Information über die bestätigte, ausgewählte oder korrigierte Parklückenart zur Verfügung, so dass sich der Schritt a. ergibt.

Ist die Parklückenart, in die das Kraftfahrzeug einparken soll, eine Längsparklücke, so kann die Einstellung des rechten Außenspiegels, die der Längsparklücke angepasst ist, eine Einstellung sein, bei der der Fahrer vermutlich in dem rechte Außenspiegel eine potentiell vorhandene Bordsteinkante sieht. Hierzu muss der rechte Außenspiegel üblicherweise weiter Richtung Boden verstellt werden. Es entspricht einer vorteilhaften, der Längsparklücke angepassten Einstellung des linken Außenspiegels, wenn der Fahrer vermutlich im linken Außenspiegel eine außenliegende Ecke eines potentiellen, hinter der Parklücke sich befindenden Objektes sieht.

Ist die Parklückenart, in die das Kraftfahrzeug einparken soll, eine Querparklücke, so kann die Einstellung des rechten Außenspiegels, die der Querparklücke angepasst ist, eine Einstellung sein, bei der der Fahrer vermutlich in dem rechte Außenspiegel eine potentiell vorhandene Ecke eines Objektes sieht, um die das einparkende Kraftfahrzeug beim Einparkvorgang herumbewegt werden muss. Dieses Objekt befindet sich also im Innenradius des Weges, den das einparkende Kraftfahrzeug zurücklegt. Eine vorteilhaften, der Querparklücke angepassten Einstellung des linken Außenspiegels entspricht es, wenn der Fahrer vermutlich im linken Außenspiegel eine außenliegende Ecke eines hinter der Parklücke sich befindenden Objektes sieht. Dieses Objekt befindet sich somit hinter dem Außenradius des Weges, den das einparkende Fahrzeug zurücklegt.

Die in den beiden vorherigen Abschnitten aufgeführten Objekte können insbesondere ein parkendes Kraftfahrzeug, ein Hindernis oder dergleichen sein. Die in den beiden vorherigen Abschnitten aufgeführten Gegenstände, die der Fahrer in dem rech-ten bzw. linken Außenspiegel bei einem Einparkvorgang in eine Längsparklücke bzw. eine Querparklücke sieht, müssen nicht während des gesamten Einpark-vorganges, sondern nur während eines relevanten Teil des Einparkvorganges sichtbar sein. Als relevant gilt insbesondere der Teil des Einparkvorganges, bei dem die oben aufgeführten Gegenstände sichtbar sein sollen, um Kollisionen zu vermeiden.

In einer bevorzugten Ausführungsform der Erfindung wird davon ausgegangen, dass die oben aufgeführten Spiegeleinstellungen, die für den linken Außenspiegel beim Einparken in eine Längsparklücke und/oder für den linken und/oder rechten Außenspiegel beim Einparken in eine Querparklücke vorteilhaft sind, der Einstellung entsprechen, die für der Fahrer auch während der Fahrt mit dem Kraftfahrzeug selbst vorteilhaft sind und die der Fahrer daher bereits zu Beginn der Fahrt eingestellt hat. In dieser Ausführungsform werden daher nur die Außenspiegel verstellt, bei denen nicht davon ausgegangen werden kann, dass die Einstellung während der Fahrt auch während des Einparkvorganges vorteilhaft ist. Insbesondere kann es sein, dass nur, wenn das Kraftfahrzeug in eine Längsparklücke einparkt, der rechte Außenspiegel in Schritt b. verstellt wird.

Alternativ ist es denkbar, dass beide Außenspiegel bei einem Einparkvorgang in eine Längsparklücke in Richtung Boden verstellt werden.

In einer vorteilhaften Ausführungsform der Erfindung ist die mindestens eine Einstellung, die der Außenspiegel während des Einparkvorganges in eine Längsparklücke und/oder Querparklücke verstellt werden soll, als fester Wert in der Steuereinheit oder dem Parksteuergerät gespeichert. Hierbei kann es sein, dass diese Einstellung von dem Hersteller vorgegeben ist. Alternativ kann es sein, dass der Fahrer diese Einstellung vorgeben kann, die dann gespeichert und wieder verwendet wird. Die Steuereinheit oder das Parksteuergerät verwendet in Schritt b. nun diese gespeicherte Einstellung in Abhängigkeit von der aus Schritt a. bekannten Parklückenart. Hierbei kann es sein, dass nur die zu verstellende Einstellung des rechten Außenspiegels für den Einparkvorgang in eine Längsparklücke gespeichert ist.

In einer alternativen Ausführungsform der Erfindung berechnet die Steuereinheit vor Schritt b. anhand der vom Parksteuergerät vermessenen Koordinaten der Ecken der Objekte und der Parklückenart die Einstellung des Außenspiegels. Hierbei können der Steuereinheit optional Daten über die Sitzposition des Fahrers vorliegen, die die Steuereinheit bei der Berechnung der richtigen Einstellung des Außenspiegels verwenden kann.

Es ist denkbar, dass ein Verstellen des Außenspiegels nur kurz vor dem Moment erfolgt, an dem sich das Kraftfahrzeug rückwärts in die Parklücke zu bewegen beginnt. Dieser Moment kann z. B. als gegeben von der Steuereinheit angenommen werden, wenn der Rückwärtsgang eingelegt wird, so dass ein Verstellen des Außenspiegels in Schritt b. erst dann erfolgt, nachdem der Fahrer den Rückwärtsgang eingelegt hat. So ist es denkbar, dass, wenn Schritt a. bereits vor dem Einlegen des Rückwärtsganges erfolgt sind, die Steuereinheit wartet, dass der Rückwärtsgang eingelegt wird, und danach den Außenspiegel in Schritt b. unmittelbar nach dem Einlegen des Rückwärtsganges verstellen lässt. Wird hingegen vor Schritt a. der Rückwärtsgang eingelegt, so können die Schritte a. und b. unmittelbar aufeinander folgen.

Es kann sein, dass die Steuereinheit oder das Parksteuergerät mit der Steuereinheit sich in einem Schlafmodus befindet oder ausgeschaltet ist und durch einen weiteren Schritt vor Schritt a. aktiviert wird. In dem Schritt erfasst die Steuereinheit bzw. das Parksteuergerät durch ein empfangenes Signal, dass der Einparkvorgang erfolgen soll. Das Signal kann dadurch erzeugt werden, dass der Fahrer des Kraftfahrzeuges ein Parksteuergerät für eine Parklückensuche aktiviert, dass das Kraftfahrzeug stillsteht oder eine vorgegebene Geschwindigkeit unterschreitet oder dass der Fahrer einen Rückwärtsgang einlegt.

Bevorzugt wird der Außenspiegel automatisch zumindest nach erfolgtem Einparkvorgang wieder in eine Einstellung, die während einer Fahrt für den Außenspiegel vorteilhaft ist, zurückgestellt. In diesem Fall gewährleistet das erfindungsgemäße Verfahren auch eine Einstellung des Außenspiegels, der für eine sich an den Einparkvorgang anschließende Fahrt vorteilhaft ist. Hierbei kann es sein, dass der Außenspiegel bei jedem Einlegen des Vorwärtsganges während des Einparkvorganges in die für die Fahrt vorteilhafte Einstellung zurückgestellt wird und bei jedem Einlegen des Rückwärtsganges in die für den Einparkvorgang vorteilhafte Einstellung verstellt wird. Hierbei erfolgt Schritt a. vorteilhafterweise nur einmal vor dem Moment, an dem sich das Kraftfahrzeug rückwärts in die Parklücke zu bewegen beginnt. Alternativ kann der Außenspiegel automatisch nur am Ende des gesamten Einparkvorganges zurückgestellt werden. Das Ende des Einparkvorganges kann z. B. durch das Parksteuergerät erkannt werden, wenn eine gewünschte Endposition des Kraftfahrzeuges erreicht wird. Das Ende des Einparkvorganges kann aber auch durch ein längeren Stillstand des Kraftfahrzeuges, ein Deaktivieren des Parksteuergerätes oder ein Verstellen des Zündschlüssels durch entsprechende Signale von der Steuereinheit erfasst werden. Alternativ kann der Außenspiegel automatisch zu Beginn einer neuen Fahrt in eine Einstellung, die während einer Fahrt für den Außenspiegel vorteilhaft ist, zurückgestellt werden. Der Beginn einer neuen Fahrt kann z. B. durch Einstecken des Zündschlüssels von der Steuereinheit erfasst werden. Bei der Einstellung, die während einer Fahrt für den Außenspiegel vorteilhaft ist, kann es sich um die Einstellung handeln, die zu Beginn des erfindungsgemäßen Verfahrens vorliegt und die von der Steuereinheit abgespeichert wird. Alternativ können in der Steuereinheit feste, von dem Hersteller oder dem Fahrer vorgegebene Werte für die Einstellung gespeichert sein, in die der Außenspiegel zurückgestellt wird.

In einer Ausführungsform der Erfindung kann es sein, dass das Verfahren vom Fahrer deaktiviert werden kann. In dieser Ausführungsform kann der Fahrer entscheiden, ob das Verfahren beim Einparkvorgang durchgeführt wird oder nicht.

Die Aufgabe der Erfindung wird auch durch ein Kontrollsystem zum Verstellen mindestens eines Außenspiegels eines Kraftfahrzeuges gelöst. Das Kontrollsystem weist ein Steuergerät zum automatischen Verstellen des Außenspiegels und eine Steuereinheit auf, wobei insbesondere die Steuereinheit geeignet ist, das erfindungsgemäße Verfahren durchzuführen.

Das Steuergerät kann eine zu dem Parksteuergerät und/oder der Steuereinheit separate Baugruppe sein. Alternativ können das Steuergerät, die Steuereinheit und/oder das Parksteuergerät als eine Baugruppe, z. B. auf einer Platine oder mit einer Recheneinheit, realisiert sein. Das Steuergerät, die Steuereinheit und das Parksteuergerät sind im Kraftfahrzeug angeordnet. Das Steuergerät, die Steuereinheit und/oder das Parksteuergerät können Teil eines Steuersystems sein, mit denen weitere Funktionen des Kraftfahrzeuges gesteuert werden.

Weitere, die Erfindung verbessernde Maßnahmen ergeben sich aus der nachfolgenden Beschreibung zu den Ausführungsbeispielen der Erfindung, welche in den Figuren schematisch dargestellt ist. Sämtliche aus den Ansprüchen, der Beschreibung oder der Zeichnung hervorgehende Merkmale und/oder Vorteile, einschließlich konstruktiver Einzelheiten, räumlicher Anordnung und Verfahrensschritte, können sowohl für sich als auch in den verschiedensten Kombinationen erfindungswesentlich sein. Es zeigen:
- Fig. 1a: eine vorteilhafte Einstellung der Außenspiegel bei einer Längsparklücke
- Fig. 1b: eine vorteilhafte Einstellung der Außenspiegel bei einer Querparklücke
- Fig. 2a: ein erstes Ausführungsbeispiel für ein erfindungsgemäße Verfahren
- Fig. 2b: ein zweites Ausführungsbeispiel für ein erfindungsgemäßes Verfahren
- Fig. 2c: ein drittes Ausführungsbeispiel für ein erfindungsgemäßes Verfahren
- Fig. 3a: ein erstes Ausführungsbeispiel für ein erfindungsgemäßes Kontrollsystem
- Fig. 3b: ein zweites Ausführungsbeispiel für ein erfindungsgemäßes Kontrollsystem

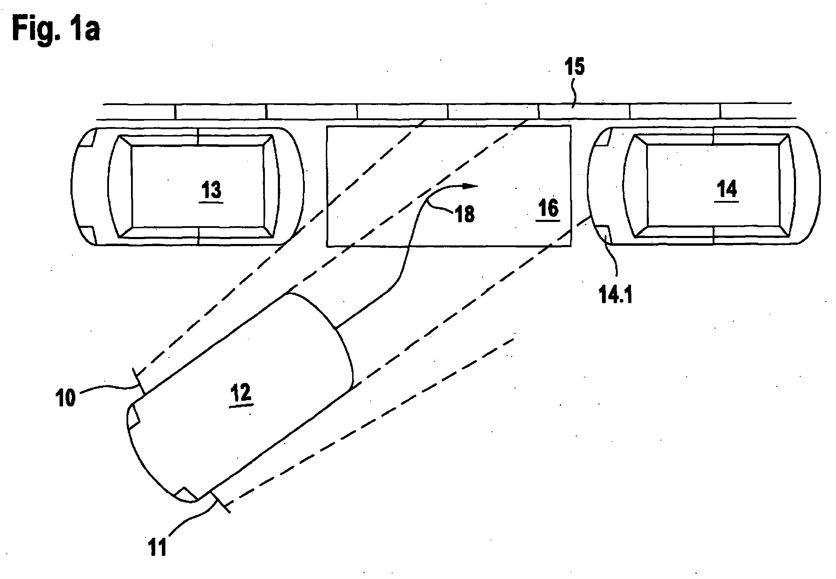

In Fig. 1a ist eine Längsparklücke 16 zwischen zwei bereits parkenden Kraftfahrzeugen 13, 14 dargestellt, in die ein Fahrer eines Kraftfahrzeug 12, einem Weg 18 folgend, einparken möchte. Die Außenspiegel 10, 11 des Kraftfahrzeuges 12 sind so eingestellt, dass der Fahrer während eines relevanten Teil des Einparkvorganges EP im rechten Außenspiegel 10 eine Bordsteinkante 15 und im linken Außenspiegel 11 eine der Längsparklücke 16 benachbarte, vordere Ecke 14.1 des Kraftfahrzeuges 14 sehen kann. Hierzu wird der rechte Außenspiegel 10 nach unten verstellt.

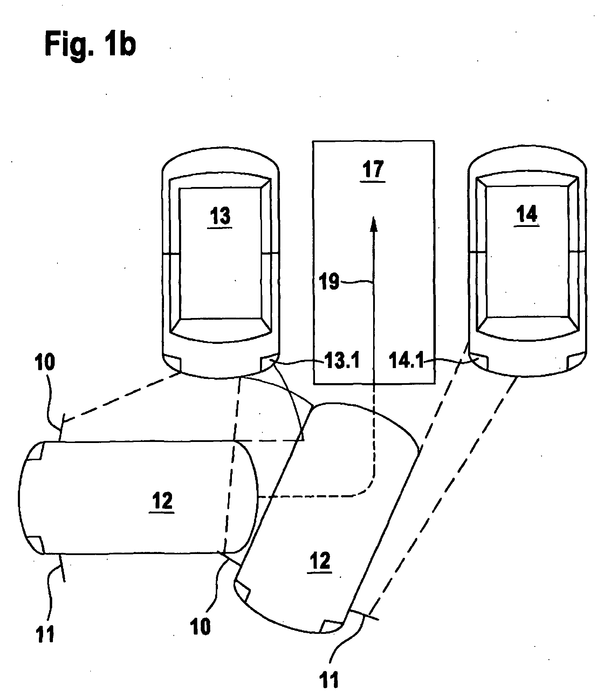

In Fig. 1b ist eine Querparklücke 17 zwischen zwei bereits parkenden Kraftfahrzeugen 13, 14 dargestellt, in die ein Fahrer eines Kraftfahrzeuges 12, einem Weg 19 folgend, einparken möchte. Die Außenspiegel 10, 11 des Kraftfahrzeuges 12 sind so eingestellt, dass der Fahrer während eines relevanten Teil des Einparkvorganges EP eine der Querparklücke 17 benachtbarte, vordere Ecke 13.1 des Kraftfahrzeuges 13 im rechten Außenspiegel 10 und eine der Querparklücke 17 benachbarte, vordere Ecke 14.1 des Kraftfahrzeuges 14 im linken Außenspiegel 11 sehen kann. Das Kraftfahrzeug ist an zwei unterschiedlichen Positionen des Weges 19 dargestellt.

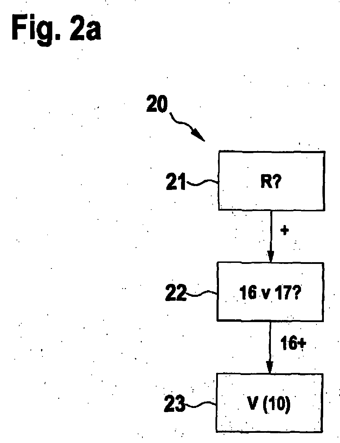

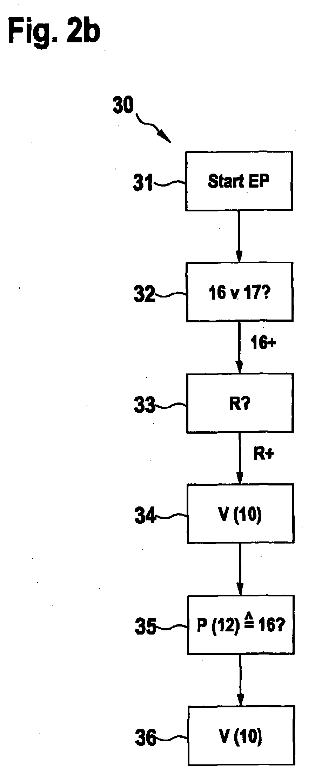

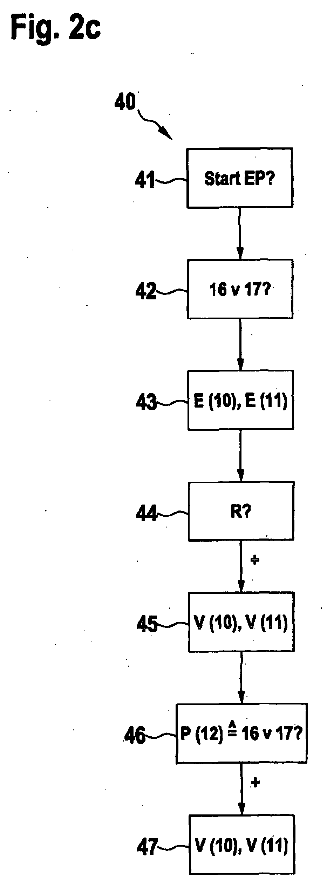

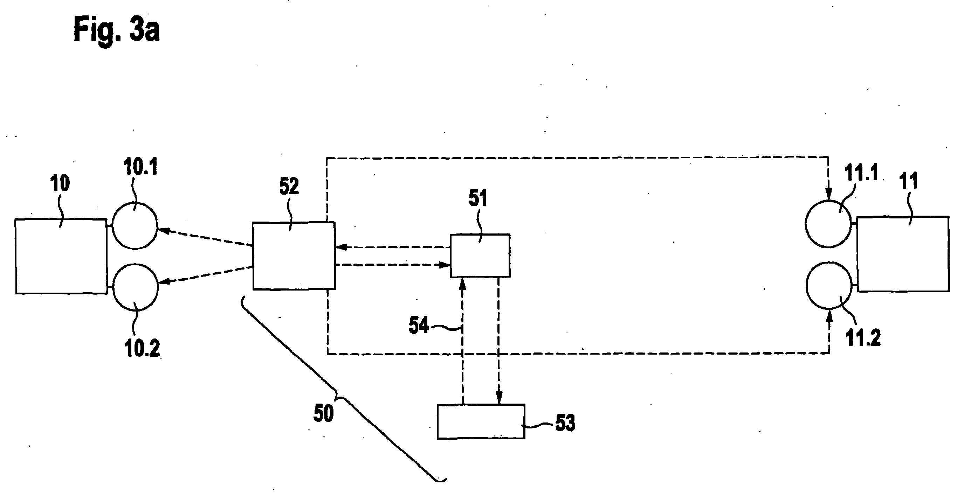

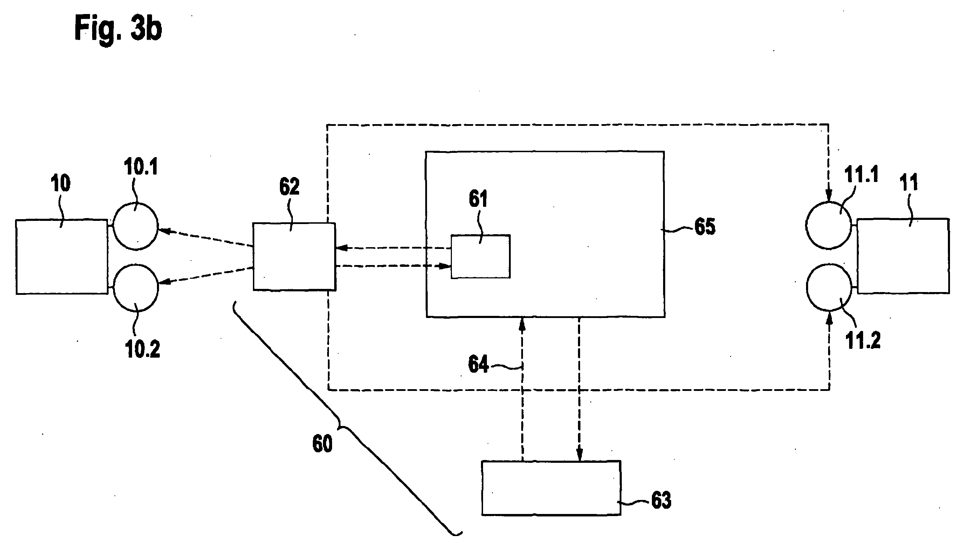

In den Fig. 2a bis 2c sind drei unterschiedliche Ausführungsbeispiele des erfindungsgemäßen Verfahrens 20, 30, 40 dargestellt. Ein Kontrollsystem 50, mit dem das in Figur 2a dargestellten Verfahren durchführbar ist, ist in Figur 3a dargestellt. Ein Kontrollsystem 60, mit dem die in den Figuren 2b und 2c dargestellte Verfahren 30, 40 durchgeführt werden können, ist in Figur 3b dargestellt. Kommunikationsleitungen sind in den Figuren 3a und 3b gestrichelt dargestellt.

In der Figur 2a wird als ein erster Schritt 21 des Verfahrens 20 von einer in Fig. 3a dargestellten Steuereinheit 51 erfasst, dass ein Einparkvorgang EP stattfinden soll. Hierbei erhält die Steuereinheit 51 über eine nicht dargestellte Kommunikationsleitung ein Signal, dass ein Rückwärtsgang R eingelegt worden ist. In einem zweiten Schritt 22 erfragt die Steuereinheit 51 von dem Fahrer über ein Display 53 mit nicht dargestellten Eingabetasten, ob der Fahrer in eine Längsparklücke 16 oder eine Querparklücke 17 einparken möchte. Erfährt die Steuereinheit 51 über eine Kommunikationsleitung 54, dass der Fahrer in eine Längsparklücke 16 einparken möchte, so schickt die Steuereinheit 51 in einem weiteren Schritt 23 Signale an ein Steuergerät 52, das die Außenspiegel 10, 11 über Motoren 10.1, 10.2, 11.1, 11.2 verstellen kann, dass der rechte Außenspiegel 10 so verstellt werden soll, dass eine potentiell vorhandene Bordsteinkante 15 in dem rechten Außenspiegel 10 sichtbar ist. Die Einstellung E(10), in die der rechte Außenspiegel 10 verstellt werden soll, ist als fester Wert in der Steuereinheit 51 gespeichert. Nun wird der rechte Außenspiegel 10 verstellt. Erfährt die Steuereinheit 51 hingegen in Schritt 22, dass der Fahrer in eine Querparklücke 17 einparken möchte, so versendet die Steuereinheit 51 keine Signale an das Steuergerät 52 und Schritt 23 findet nicht statt.

In der Figur 2b ist das erfindungsgemäße Verfahren 30 in einem semiautonomen Einparkvorgang EP integriert, wobei nur Verfahrensschritte, die für das erfindungsgemäße Verfahren 30 relevant sind, dargestellt sind. Eine in Fig. 3b dargestellte Steuereinheit 61 ist Teil eines Parksteuergerätes 65, wobei im Folgenden davon ausgegangen wird, dass relevante Informationen der Steuereinheit 61 über das Parksteuergerät 65 in den Verfahren 30, 40 zur Verfügung stehen. Der Begriff "Steuereinheit 61" kann im Folgenden durch den Begriff "Parksteuergerät 65" ersetzt werden.

Der Fahrer beginnt den semiautonomen Einparkvorgang EP, in dem der Fahrer dem in Fig. 3b dargestelltem Parksteuergerät 65 über einen Display 63 mit nicht dargestellten Eingabetasten in einem Schritt 31 mitteilt, dass der Fahrer einparken möchte. Danach beginnt das Parksteuergerät 65 potentielle Parklücken zu vermessen. Anschließend erfragt das Parksteuergerät 65 in einem Schritt 32 mit Hilfe des Displays 63, ob der Fahrer die vermessen Parklücke als Längsparklücke 16 oder als Querparklücke 17 erachtet. Eine entsprechende Eingabe des Fahrers wird über eine Kommunikationsleitung 64 an das Parksteuergerät 65 geleitet. Wird in eine Querparklücke 17 eingeparkt, so veranlasst die Steuereinheit 61 keine weiteren Schritte zum Verstellen der Außenspiegel 10, 11. Wird hingegen in eine Längsparklücke 16 eingeparkt, so wartet die Steuereinheit 61 darauf, dass der Rückwärtsgang R eingelegt wird, worüber das Parksteuergerät 65 in einem Schritt 33 ein Signal erhält. Daraufhin schickt die Steuereinheit 61 in einem Schritt 34 Signale an ein Steuergerät 62, das die Außenspiegel 10, 11 über Motoren 10.1, 10.2, 11.1, 11.2 verstellen kann, dass der rechte Außenspiegel 10 so verstellt werden soll, dass eine potentiell vorhandene Bordsteinkante 15 in dem rechten Außenspiegel 10 sichtbar ist. Die Einstellung E(10), in die der rechte Außenspiegel 10 verstellt werden soll, ist als fester Wert in dem Parksteuergerät 65 gespeichert. Das Steuergerät 62 verstellt nun den rechten Außenspiegel 10. Nun bestimmt der Fahrer, die Geschwindigkeit des Kraftfahrzeuges 12, während das Parksteuergerät 65 die Lenkung kontrolliert und das Kraftfahrzeug 12 in dem nach Schritt 32 von dem Parksteuergerät 65 berechneten Weg 18, 19 hält. Wird von dem Parksteuergerät 65 in einem Schritt 35 erkannt, dass eine Position P(12) des Kraftfahrzeuges 12 der Längsparklücke 16 entspricht, so veranlasst die Steuereinheit 61 in einem Schritt 36, dass der rechte Außenspiegel 10 in seine vorherige Einstellung, die in dem Parksteuergerät 65 gespeichert worden ist, durch das Steuergerät 62 zurückgestellt wird.

In Figur 2c ist das erfindungsgemäße Verfahren 40 Teil eines autonomen Einparkvorganges, bei dem nur die für das Verfahren 40 relevanten Schritte abgebildet sind. Unterschreitet die Geschwindigkeit des Kraftfahrzeuges 12 eine maximale Geschwindigkeit von beispielsweise 50 km/h, so ermittelt und vermisst das Parksteuergerät 65 fortlaufend potentielle Parklücken. Gibt der Fahrer über das Display 63 in einem Schritt 41 ein, dass er einparken möchte, so macht das Parksteuergerät 65 dem Fahrer über das Display 63 einen Vorschlag, in welche Parklücke eingeparkt werden könnte und ob es sich hierbei um eine Längsparklücke 16 oder eine Querparklücke 17 handelt. Stimmt der Fahrer in einem Schritt 42 dem Vorschlag über das Display 63 zu oder korrigiert ihn, so berechnet das Parksteuergerät 65, insbesondere die Steuereinheit 61, anhand dieser Information und den Koordinaten der parkenden Kraftfahrzeuge 13, 14 in einem Schritt 43 eine optimale Einstellung E(10), E(11) für den rechten und den linken Außenspiegel 10, 11 in Abhängigkeit von der Parklückenart. Hierbei können dem Parksteuergerät 65 optional Daten über eine Sitzposition des Fahrers vorliegen. Nun wartet die Steuereinheit 61 darauf, dass der Rückwärtsgang R eingelegt wird, worüber das Parksteuergerät 65 in einem Schritt 44 ein Signal erhält. Daraufhin schickt die Steuereinheit 61 in einem Schritt 45 Signale an ein Steuergerät 62, dass beide Außenspiegel 10, 11 entsprechend der berechneten Einstellung E(10), E(11) verstellt werden sollen, worauf die Außenspiegel 10, 11 verstellt werden. Während des Einparkvorganges EP wird durch das Parksteuergerät 65 sowohl die Lenkung als auch die Geschwindigkeit kontrolliert und das Kraftfahrzeug 12 in dem nach Schritt 42 von dem Parksteuergerät 65 berechneten Weg 18, 19 hält. Wird von dem Parksteuergerät 65 in einem Schritt 46 erkannt, dass das Kraftfahrzeug 12 sich korrekt in der Parklücke 16, 17 befindet, so veranlasst die Steuereinheit 61 in einem Schritt 47, dass die Außenspiegel 10, 11 in ihre vorherige Einstellung, die in dem Parksteuergerät 65 gespeichert ist, durch das Steuergerät 62 zurückgestellt werden.

Das Verstellen des rechten Außenspiegels wird in den Figuren 2b und 2c mit V(10), das Verstellen des linken Außenspiegels in Figur 2c mit V(11) bezeichnet.

## Patentansprüche

1. Verfahren (20, 30, 40), mit dem eine einer Parklückenart (16, 17) entsprechenden Einstellung (E(10), E(11)) mindestens eines Außenspiegels (10, 11) eines Kraftfahrzeuges (12) während eines Einparkvorganges (EP) erreicht wird, wobei das Verfahren (20, 30, 40) mindestens die folgenden Schritte aufweist:
a. eine Steuereinheit (51, 61) des Kraftfahrzeuges (12) erfasst die Parklückenart (16, 17), in die das Kraftfahrzeug (12) einparken soll, wobei die Parklückenart (16, 17) Längsparklücken (16) und Querparklücken (17) umfasst,
b. die Steuereinheit (51, 61) veranlasst ein Verstellen (V(10), V(11)) des Außenspiegels (10, 11) in eine Einstellung (E(10), E(11)), die der in Schritt a. erfassten Parklückenart (16, 17) angepasst ist, wenn eine aktuelle Einstellung des Außenspiegels nicht der Einstellung (E(10), E(11)), die der in Schritt a. erfassten Parklückenart (16, 17) angepasst ist, entspricht
wobei in Schritt a. die Steuereinheit (51, 61) die Parklückenart (16, 17), in die das Kraftfahrzeug (12) einparken soll, durch ein empfangenes Signal erkennt, wobei das Signal dadurch erzeugt wird, dass ein Fahrer die Parklückenart (16, 17), in die das Kraftfahrzeug (12) einparken soll, vorgibt und/oder dass ein Parksteuergerät (65) durch Vermessen einer Umgebung des Kraftfahrzeuges (12) die Parklückenart (16, 17), in die das Kraftfahrzeug (12) einparken soll, ermittelt.

2. Verfahren (20, 30, 40) nach Anspruch 1, **dadurch gekennzeichnet, dass** das Verfahren (20, 30, 40) Teil eines autonomen oder semiautonomen Einparkvorganges (EP), der insbesondere mit Hilfe eines Parksteuergerätes (65) durchgeführt wird, ist.

3. Verfahren (20, 30, 40) nach einem der vorhergehenden Ansprüche, **dadurch gekennzeichnet, dass** ein Verstellen (V(10), V(11)) des Außenspiegels (10, 11) in Schritt b. erst dann erfolgt, nachdem der Fahrer den Rückwärtsgang (R) eingelegt hat, wobei insbesondere, wenn Schritt a. bereits vor dem Einlegen des Rückwärtsganges (R) erfolgt ist, der Außenspiegel (10, 11) in Schritt b. unmittelbar nach dem Einlegen des Rückwärtsganges (R) verstellt wird.

4. Verfahren (20, 30, 40) nach einem der vorhergehenden Ansprüche, **dadurch gekennzeichnet, dass** eine einer Längsparklücke (16) angepasste Einstellung (E(10)) des rechten Außenspiegels (10) derart ausgestaltet ist, dass der Fahrer in dem Außenspiegel (10) eine potentiell vorhandene Bordsteinkante (15) sieht, wobei insbesondere der Außenspiegel (10) in Schritt b. nach unten verstellt wird.

5. Verfahren (20, 30, 40) nach einem der vorhergehenden Ansprüche, **dadurch gekennzeichnet, dass** eine einer Querparklücke (17) angepasste Einstellung (E(10)) des rechten Außenspiegels (10) derart ausgestaltet ist, dass der Fahrer eine potentiell vorhandene Ecke (13.1) eines Objektes (13), um die das Kraftfahrzeug (12) beim Einparkvorgang (EP) herumbewegt werden muss, in dem Außenspiegel (10) sieht.

6. Verfahren (20, 30, 450) nach einem der vorhergehenden Ansprüche,
**dadurch gekennzeichnet, dass** zumindest am Ende des Einparkvorganges (EP) der Außenspiegel (10, 11) zurückgestellt wird.

7. Kontrollsystem (50, 60) zum Verstellen mindestens eines Außenspiegels (10, 11) eines Kraftfahrzeuges (12),
wobei das Kontrollsystem (50, 60) ein Steuergerät (52, 62) zum automatischen Verstellen (V(10), V(11)) des Außenspiegels (10, 11) aufweist,
wobei das Kontrollsystem (50, 60) eine Steuereinheit (51, 61) aufweist, wobei eine Parklückenart (16, 17), in die das Kraftfahrzeug (12) einparken soll, durch die Steuereinheit (51, 61) erfassbar ist, wobei die Parklückenart (16, 17) Längsparklücken (16) und Querparklücken (17) umfasst,
und wobei ein Verstellen (V(10), V(11)) des Außenspiegels (10, 11) in eine Einstellung (E(10), E(11)) des Außenspiegels (10, 11), die der Parklückenart (16, 17), in die das Kraftfahrzeug (12) eingeparkt werden soll, angepasst ist, durch die Steuereinheit (51, 61) veranlassbar ist, wenn eine aktuelle Einstellung des Außenspiegels (10, 11) nicht der Einstellung (E(10), E(11)), die der Parklückenart (16, 17), in die das Kraftfahrzeug (12) eingeparkt werden soll, angepasst ist, entspricht, wobei die Steuereinheit (51, 61) ausgebildet ist, die Parklückenart (16, 17), in die das Kraftfahrzeug (12) einparken soll, durch ein empfangenes Signal zu erkennen, wobei das Signal dadurch erzeugt wird, dass ein Fahrer die Parklückenart (16, 17), in die das Kraftfahrzeug (12) einparken soll, vorgibt und/oder dass ein Parksteuergerät (65) durch Vermessen einer Umgebung des Kraftfahrzeuges (12) die Parklückenart (16, 17), in die das Kraftfahrzeug (12) einparken soll, ermittelt.

8. Kontrollsystem (50, 60) nach Anspruch 7, **dadurch gekennzeichnet, dass** die Steuereinheit (51, 61) Teil eines Parksteuergerätes (65) zum autonomen oder semiautonomen Einparken ist.

9. Kontrollsystem (50, 60) nach Anspruch 7 oder 8, **dadurch gekennzeichnet, dass** auf dem Kontrollsystem (50, 60) ein Verfahren (20, 30, 40) nach einem der Ansprüche 1 bis 6 betrieben wird.

## Claims

1. Method (20, 30, 40) with which a setting (E(10), E(11)), corresponding to a type of parking space (16, 17), of at least one exterior rear-view mirror (10, 11) of a motor vehicle (12) is brought about during a parking process (EP), wherein the method (20, 30, 40) comprises at least the following steps:
a. a control unit (51, 61) of the motor vehicle (12) detects the type of parking space (16, 17) in which the motor vehicle (12) is to park, wherein the type of parking space (16, 17) comprises longitudinal parking spaces (16) and transverse parking spaces (17);
b. the control unit (51, 61) brings about adjustment (V(10), V(11)) of the exterior rear-view mirror (10, 11) into a setting (E(10), E(11)) which is adapted to the type of parking space (16, 17) detected in step a., if a current setting of the exterior rear-view mirror does not correspond to the setting (E(10), E(11)) which is adapted to the type of parking space (16, 17) detected in step a.;
wherein in step a. the control unit (51, 61) detects the type of parking space (16, 17) in which the motor vehicle (12) is to park by means of a received signal, wherein the signal is generated in that a driver predefines the type of parking space (16, 17) in which the motor vehicle (12) is to park and/or in that a parking control device (65) determines the type of parking space (16, 17) in which the motor vehicle (12) is to park by measuring surroundings of the motor vehicle (12).

2. Method (20, 30, 40) according to Claim 1, **characterized in that** the method (20, 30, 40) is part of an autonomous or semi-autonomous parking process (EP) which is carried out, in particular, using a parking control device (65).

3. Method (20, 30, 40) according to one of the preceding claims, **characterized in that** adjustment (V(10), V(11)) of the exterior rear-view mirror (10, 11) in step b. does not take place until after the driver has engaged the reverse gear (R), wherein, in particular, if step a. has already taken place before the engagement of the reverse gear (R), the exterior rear-view mirror (10, 11) is adjusted in step b. immediately after the engagement of the reverse gear (R).

4. Method (20, 30, 40) according to one of the preceding claims, **characterized in that** a setting (E(10)), adapted to a longitudinal parking space (16), of the right-hand exterior rear-view mirror (10) is configured in such a way that the driver sees a potentially present kerbstone (15) in the exterior rear-view mirror (10), wherein, in particular, the exterior rear-view mirror (10) is adjusted downward in step b.

5. Method (20, 30, 40) according to one of the preceding claims, **characterized in that** a setting (E(10)), adapted to a transverse parking space (17), of the right-hand exterior rear-view mirror (10) is configured in such a way that the driver sees in the exterior rear-view mirror (10) a potentially present corner (13.1) of an object (13) around which the motor vehicle (12) has to be moved during the parking process (EP).

6. Method (20, 30, 40) according to one of the preceding claims, **characterized in that** the exterior rear-view mirror (10, 11) is reset at least at the end of the parking process (EP).

7. Monitoring system (50, 60) for adjusting at least one exterior rear-view mirror (10, 11) of a motor vehicle (12);
wherein
the monitoring system (50, 60) has a control device (52, 62) for automatically adjusting (V(10), V(11)) the exterior rear-view mirror (10, 11);
wherein
the monitoring system (50, 60) has a control unit (51, 61), wherein a type of parking space (16, 17) in which the motor vehicle (12) is to park can be detected by means of the control unit (51, 61), wherein the type of parking space (16, 17) comprises longitudinal parking spaces (16) and transverse parking spaces (17), and wherein an adjustment (V(10), V(11)) of the exterior rear-view mirror (10, 11) into a setting (E(10), E(11)) of the exterior rear-view mirror (10, 11) which is adapted to the type of parking space (16, 17) in which the motor vehicle (12) is to be parked can be brought about by means of the control unit (51, 61) if a current setting of the exterior rear-view mirror (10, 11) does not correspond to the setting (E(10), E(11)) which is adapted to the type of parking space (16, 17) in which the motor vehicle (12) is to be parked, wherein the control unit (51, 61) is designed to detect the type of parking space (16, 17) in which the motor vehicle (12) is to park, by means of a received signal, wherein the signal is generated in that a driver predefines the type of parking space (16, 17) in which the motor vehicle (12) is to park, and/or in that a parking control device (65) determines the type of parking space (16, 17) in which the motor vehicle (12) is to park by measuring surroundings of the motor vehicle (12).

8. Monitoring system (50, 60) according to Claim 7, **characterized in that** the control unit (51, 61) is part of a parking control device (65) for autonomously or semi-autonomously performing parking.

9. Monitoring system (50, 60) according to Claim 7 or 8, **characterized in that** a method (20, 30, 40) according to one of Claims 1 to 6 is operated on the monitoring system (50, 60).

## Revendications

1. Procédé (20, 30, 40), avec lequel un réglage (E(10), E(11)), correspondant à un type de place de stationnement (16, 17), d'au moins un rétroviseur extérieur (10, 11) d'un véhicule automobile (12) est atteint pendant un processus de stationnement (EP), le procédé (20, 30, 40) comportant au moins les étapes suivantes :
a. une unité de commande (51, 61) du véhicule automobile (12) détecte le type de place de stationnement (16, 17) dans lequel le véhicule automobile (12) doit être garé, le type de place de stationnement (16, 17) comprenant les places de stationnement en longueur (16) et les places de stationnement en épi (17) ;
b. l'unité de commande (51, 61) ordonne un déplacement (V(10), V(11)) du rétroviseur extérieur (10, 11) dans un réglage (E(10), E(11)) adapté au type de place de stationnement (16, 17) détecté à l'étape a. lorsqu'un réglage actuel du rétroviseur extérieur ne correspond pas au réglage (E(10), E(11)) adapté au type de place de stationnement (16, 17) détecté à l'étape a. ;
sachant qu'à l'étape a. l'unité de commande (51, 61) reconnaît par un signal reçu le type de place de stationnement (16, 17) dans lequel le véhicule automobile (12) doit être garé, le signal étant produit lorsqu'un conducteur indique le type de place de stationnement (16, 17) dans lequel le véhicule automobile (12) doit se garer et/ou qu'un appareil de commande de stationnement (65) détermine par mesure d'un environnement du véhicule automobile (12) le type de place de stationnement (16, 17) dans lequel le véhicule automobile (12) doit se garer.

2. Procédé (20, 30, 40) selon la revendication 1, **caractérisé en ce que** le procédé (20, 30, 40) fait partie d'un processus de stationnement (EP) autonome ou semi-autonome notamment mis en oeuvre à l'aide d'un appareil de commande de stationnement (65).

3. Procédé (20, 30, 40) selon l'une quelconque des revendications précédentes, **caractérisé en ce qu'**un déplacement (V(10), V(11)) du rétroviseur extérieur (10, 11) ne se produit à l'étape b. qu'après que le conducteur ait embrayé la marche arrière (R) sachant que notamment, lorsque l'étape a. s'est produite déjà avant le passage de la marche arrière (R), le rétroviseur extérieur (10, 11) est déplacé à l'étape b. directement après l'embrayage de la marche arrière (R).

4. Procédé (20, 30, 40) selon l'une quelconque des revendications précédentes, **caractérisé en ce qu'**un réglage (E(10)), adapté à une place de stationnement en longueur (16), du rétroviseur extérieur (10) droit est configuré de telle sorte que le conducteur voie dans le rétroviseur extérieur (10) un bord de trottoir (15) potentiellement présent, le rétroviseur extérieur (10) étant notamment déplacé vers le bas à l'étape b.

5. Procédé (20, 30, 40) selon l'une quelconque des revendications précédentes, **caractérisé en ce qu'**un réglage (E(10)), adapté à une place de stationnement en épi (17), du rétroviseur extérieur (10) droit est configuré de telle sorte que le conducteur voie dans le rétroviseur extérieur (10) un coin (13.1) potentiellement présent d'un objet (13) autour duquel le véhicule automobile (12) doit être déplacé lors du processus de stationnement (EP).

6. Procédé (20, 30, 450) selon l'une quelconque des revendications précédentes, **caractérisé en ce que** le rétroviseur extérieur (10, 11) est remis en place au moins à la fin du processus de stationnement (EP).

7. Système de contrôle (50, 60) pour déplacer au moins un rétroviseur extérieur (10, 11) d'un véhicule automobile (12) ;
le système de contrôle (50, 60) comportant un appareil de commande (52, 62) pour le réglage automatique (V(10), V(11)) du rétroviseur extérieur (10, 11) ;
le système de contrôle (50, 60) comportant une unité de commande (51, 61) ;
un type de place de stationnement (16, 17) dans lequel le véhicule automobile (12) doit être garé pouvant être détecté par l'unité de commande (51, 61), le type de place de stationnement (16, 17) comprenant des places de stationnement en longueur (16) et des places de stationnement en épi (17) ; et
un déplacement (V(10), V(11)) du rétroviseur extérieur (10, 11) dans un réglage (E(10), E(11)) du rétroviseur extérieur (10, 11) étant adapté au type de place de stationnement (16, 17) dans lequel le véhicule automobile (12) doit être garé pouvant être provoqué par l'unité de commande (51, 61) lorsqu'un réglage actuel du rétroviseur extérieur (10, 11) ne correspond pas au réglage (E(10), E(11)) adapté au type de place de stationnement (16, 17) dans lequel le véhicule automobile (12) doit être garé, l'unité de commande (51, 61) étant réalisée pour détecter le type de place de stationnement (16, 17) dans lequel le véhicule automobile (12) doit être garé par le biais d'un signal reçu, le signal étant **caractérisé en ce qu'**un conducteur indique le type de place de stationnement (16, 17) dans lequel le véhicule automobile (12) doit être garé et/ou qu'un appareil de commande de stationnement (65) calcule par mesure d'un environnement du véhicule automobile (12) le type de place de stationnement (16, 17) dans lequel le véhicule automobile (12) doit être garé.

8. Système de contrôle (50, 60) selon la revendication 7, **caractérisé en ce que** l'unité de commande (51, 61) fait partie d'un appareil de commande de stationnement (65) servant au stationnement autonome ou semi-autonome.

9. Système de contrôle (50, 60) selon la revendication 7 ou 8, **caractérisé en ce qu'**un procédé (20, 30, 40) selon l'une quelconque des revendications 1 à 6 est entraîné sur le système de contrôle (50, 60).
